# EUROPÄISCHE PATENTSCHRIFT

(11) **EP 2 868 410 B1**
(45) Veröffentlichungstag und Bekanntmachung des Hinweises auf die Patenterteilung: **13.12.2017**
(21) Anmeldenummer: 13190861.8
(22) Anmeldetag: 30.10.2013
(51) Int. Cl.: B23B 31/28

(54) **Spanneinrichtung für Werkzeugmaschinen**
Clamping device for machine tools
Dispositif de serrage pour machines-outils

(43) Veröffentlichungstag der Anmeldung: 06.05.2015
(73) Patentinhaber: MTH GbR Markus und Thomas Hiestand, 88630 Pfullendorf (DE)
(72) Erfinder: Hiestand, Karl, 88630 Pfullendorf (DE)
(74) Vertreter: Riebling, Peter

(56) Entgegenhaltungen:
- EP-A1- 2 103 368
- EP-A1- 2 548 681
- DE-A1- 3 709 246
- US-A1- 2008 073 862

## Beschreibung

Die Erfindung bezieht sich auf eine Spanneinrichtung gemäß dem Oberbegriff des Anspruchs 1 für Werkzeugmaschinen, die mit einem Kraftspannfutter zur Halterung eines Werkstückes versehen und dessen Spannbacken mittels der Spanneinrichtung über eine axial verstellbare Zugstange betätigbar sind, wobei die Spanneinrichtung einen umschaltbaren elektrischen Antriebsmotor zum Auslösen von Spannbewegungen, einen Bewegungswandler zur Umsetzung der Verstellbewegungen der Rotorwelle des Antriebsmotors in die zur Betätigung der Spannbacken erforderlichen axialen Verstellbewegungen der Zugstange sowie einen Kraftspeicher zur Aufrechterhaltung der Spannkraft aufweist, der aus vorgespannten Federpaketen, die an einer Spindelmutter des Bewegungswandlers abgestützt sind, gebildet ist, sowie auf ein Verfahren zum Betrieb einer solchen Spanneinrichtung gemäß dem Oberbegriff des Anspruchs 22.

Eine solche Vorrichtung und Verfahren sind aus der EP-A1-2548681 bekannt. Durch die EP 2103368 A1 ist eine Spanneinrichtung bekannt. Der konstruktive Aufbau dieser Spanneinrichtung ist derart gewählt, dass ein extern angeordneter Antriebsmotor über einen Riementrieb mit einer Glocke trieblich verbunden ist, die über einen Bewegungswandler auf eine Zugstange einwirkt.
Um eine unerwünschte Axialverstellung der Zugstange auszuschließen, ist der Antriebsmotor zusammen mit der Spindel der Werkzeugmaschine synchron anzutreiben. Die Steuerung, um diese Synchronisation bewerkstelligen zu können, ist äußerst aufwändig, auch muss bei einem Drehrichtungswechsel der Werkzeugmaschine der Antriebsmotor ständig mit hohem Drehmoment die Drehrichtung bis zum Stillstand beibehalten, und nach einem Drehrichtungswechsel ist die Drehrichtung und das Drehmoment umzukehren. Des Weiteren ist von Nachteil, dass mittels des Riementriebes über den gesamten Drehzahlbereich der Werkzeugmaschine das jeweils geforderte hohe Drehmoment zu übertragen ist. Beschädigungen des Riementriebes sind oftmals die Folge, auch muss die hohe Belastung der Übertragungsglieder über weitere Maßnahmen abgesichert werden, um Arbeitsausfälle und Beschädigungen der Spanneinrichtungen weitgehend zu vermeiden.

Aufgabe der Erfindung ist es demnach, eine Spanneinrichtung für Werkzeugmaschinen der vorgenannten Gattung in der Weise auszubilden, dass eine aufwändige Steuerung zur Anpassung an den jeweiligen Betriebszustand der Werkzeugmaschine nicht erforderlich ist, vielmehr soll bei Arbeitsvorgängen von dem Antriebsmotor keine Antriebsenergie abgenommen werden. Dieser soll vielmehr stillgesetzt sein. Außerdem soll ein Drehrichtungswechsel der Rotorwelle des Antriebsmotors bei einem Drehrichtungswechsel der Werkzeugmaschine nicht erforderlich sein und die Belastung der Übertragungsglieder zwischen dem Antriebsmotor und dem Bewegungswandler soll äußerst gering gehalten werden, so dass Beschädigungen an diesen, insbesondere ein Bruch des Riementriebes, weitgehend ausgeschlossen sind. Dennoch soll eine eventuelle Beschädigung die Sicherheit bei Spannvorgängen nicht beeinflussen. Ferner soll es möglich sein, eine Änderung der Spannkraft während eines Arbeitsvorganges bei jeder Drehzahl vorzunehmen.

Gemäß der Erfindung wird dies bei einer Spannrichtung für Werkzeugmaschinen der eingangs genannten Art dadurch erreicht, dass auf der Abtriebswelle des Rotors ein Abtriebsglied drehbar gelagert ist, das ständig mit dem Bewegungswandler in Triebverbindung steht, dass das Abtriebsglied mittels einer ersten Servoeinrichtung mit der Abtriebswelle des Rotors koppelbar ist und dass der Bewegungswandler mittels einer zweiten Servoeinrichtung unmittelbar oder über Zwischenglieder mit der Spindel der Werkzeugmaschine verriegelbar ist.

Zweckmäßig ist es hierbei, den Bewegungswandler und den Kraftspeicher in einem glockenartig ausgebildeten Gehäuse einzusetzen, das trieblich mit dem Abtriebsglied des Rotors verbunden ist, wobei das Gehäuse formschlüssig mit der Spindelmutter des Bewegungswandlers, beispielsweise über nockenförmige Mitnehmer oder Verzahnungen, verbunden sein sollte.

Nach einer andersartigen konstruktiven Ausgestaltung kann zur Übertragung der Antriebsenergie auf die Spindelmutter des Bewegungswandler auch ein Zwischenglied vorgesehen werden, das über den Riementrieb mit dem Abtriebsglied des Antriebsmotors und gegebenenfalls über einen vorzugsweise seitlich neben dem Bewegungswandler angeordneten Mitnehmer mit der Spindelmutter formschlüssig verbunden ist.

Zur Triebverbindung des Abtriebsgliedes mit dem Gehäuse des Bewegungswandlers kann ein Riementrieb, insbesondere ein Zahnriementrieb oder eine Zahnradverbindung vorgesehen werden, wobei die Triebverbindung zwischen dem Abtriebsglied des Antriebsmotors und dem Gehäuse des Bewegungswandlers unter- oder übersetzt oder gleichlaufend ausgebildet sein kann.

Die erste und/oder die zweite Servoreinrichtung können jeweils als elektromagnetisch oder pneumatisch oder hydraulisch betätigbare Schaltkupplung ausgebildet sein. Bei einer elektromagnetisch betätigbaren Servoeinrichtung können die zuschaltbaren Bauteile über Reibglieder, über vorzugsweise mit Spitzverzahnungen versehene Zahnscheiben oder über mit Riffelungen und Rändelungen ausgestatteten Scheiben koppelbar sein. Zweckmäßig ist es auch, den Anker der elektromagnetisch betätigbaren Schaltkupplung über eine oder mehrere Rückstellfedern an dem Abtriebsglied abzustützen.

Angebracht ist es ferner, die zweite Servoeinrichtung mit einem mit dem Gehäuse des Bewegungswandlers drehfest verbundenen Stellring auszustatten, der auf der der Spindel der Werkezugmaschine zugekehrten Stirnseite mit einer Verzahnung oder einem Reibbelag versehen ist, der mit einer an der Spindel vorgesehenen Gegenverzahnung oder einem weiteren Reibbelag zusammenwirkt, wobei das Verstellglied der zweiten Servoeinrichtung über ein oder mehrere radial gerichtete, vorzugsweise mit Wälzlagern versehene Bolzen oder einem Winkelstück mit dem Verstellring in Triebverbindung stehen sollte.

Bei Auslegung der ersten Servoeinrichtung als elektromagnetisch betätigbare Schaltkupplung sollte diese aus einem ortsfest angeordneten, die Magnetspule aufnehmenden ersten Gehäuseteil und einem gegenüber diesem drehbar gelagerten zweiten Gehäuseteil bestehen, das mit der Rotorwelle des Antriebsmotors fest verbunden ist. Außerdem sollte der Anker der elektromagnetisch betätigbaren Schalkupplung drehfest axial verschiebbar mit dem Abtriebsglied des Antriebsmotors gekoppelt sein und die erste Servoeinrichtung sollte zusammen mit dem Abtriebsglied des Antriebsmotors in einem Gehäuse angeordnet sein, auf dessen Außenseite der Antriebsmotor seitlich angeflanscht ist. Des Weiteren sollte bei Ausbildung der ersten Servoeinrichtung als elektromagnetisch betätigbare Schaltkupplung das dem Antriebsmotor zugekehrte Gehäuse mit einem als Nabe ausgebildeten Einsatzstück versehen sein, auf dem das Abtriebsglied drehbar gelagert ist.

Nach einer weiteren Ausführungsvariante ist vorgesehen, das den Bewegungswandler aufnehmende Gehäuse drehbar auf einem mit der Spindel der Werkzeugmaschine fest verbundenen Zwischenstück zu lagern.

Nach einer Abwandlung kann der Rotor des Antriebsmotors aber auch unmittelbar auf dem den Bewegungswandler aufnehmenden Gehäuse drehbar gelagert sein, wobei der Anker der elektromagnetisch betätigbaren Servoeinrichtung unmittelbar an dem Rotor des Antriebsmotors axial verschiebbar sein sollte und die die Magnetspule einschließenden Bauteile auf einem an dem Gehäuse des Bewegungswandlers befestigten Zwischenstück abgestützt sein sollte.

Der Antriebsmotor, die erste Servoeinrichtung sowie die zweite Servoeinrichtung sollten gemeinsam mittels einer zentralen Recheneinheit steuerbar sein, dazu kann dem Verstellglied des Bewegungswandlers eine Wegmesseinrichtung und/oder ein oder mehrere Endschalter zugeordnet sein, deren Signale außerhalb des Gehäuses des Bewegungswandlers abgreifbar sind. Auch der Zugstange kann eine Wegmesseinrichtung zugeordnet sein, die vorzugsweise in deren der Werkzeugmaschine abgewandten Endbereich angeordnet ist.

Die erste Servoeinrichtung und die zweite Servoeinrichtung können bei dieser Spanneinrichtung in einfacher Weise in Abhängigkeit von dem Betriebszustand der Spanneinrichtung jeweils derart gleichsinnig bzw. parallel oder wechselseitig mittels einer gemeinsamen Recheneinheit geschaltet werden, dass bei beaufschlagter erster Servoeinheit zur Übertragung von Antriebsenergie auf den Bewegungswandler die Rotorwelle des Antriebsmotors mit dessen Abtriebsglied gekoppelt und die zweite Servoeinrichtung ebenfalls beaufschlagt ist, so dass die Verriegelung zwischen dem Gehäuse und der Spindel der Werkzeugmaschine gelöst ist, und dass bei einer Änderung des Arbeitsvorganges der Werkzugmaschine, beispielsweise beim Spannen oder Entspannen des Werkstückes, die erste Servoeinheit entlüftet, die zweite Servoeinrichtung ebenfalls entlüftet oder bei einer doppelseitig wirkenden Servoeinrichtung beaufschlagt und das Gehäuse des Bewegungswandlers trieblich mit der Spindel der Werkzeugmaschine verbunden wird.

Wird eine Spanneinrichtung für Werkzeugmaschinen gemäß der Erfindung ausgebildet, indem der Antriebsmotor mit dem Bewegungswandler in Triebverbindung steht und diese Verbindung zu- oder abgeschaltet werden kann, so ist es auf einfache Weise möglich, der Spanneinrichtung zum Spannen oder Entspannen eines Werkstückes Energie zuzuführen, bei Arbeitsvorgängen den Antriebsmotor aber stillzusetzen. Aufwändige Steuerungen sind dazu nicht erforderlich, vielmehr sind die beiden Servoeinrichtungen jeweils entsprechend zu betätigen, um den Antriebsmotor mit dem Bewegungswandler trieblich zu verbinden bzw. diese Verbindung zu lösen und den Bewegungswandler bei Arbeitsvorgängen durch einen Anschluss an die Spindel der Werkzeugmaschine zu blockieren.

Die an der Energieübertragung beteiligten Bauteile werden somit nur kurzzeitig belastet, Beschädigungen an diesen sind demnach im Betrieb nahezu ausgeschlossen. Dennoch ist die Spanneinrichtung, ohne dass es besonderer Vorkehrungen bedarf, stets gesichert, da bei Arbeitsvorgängen der Bewegungswandler fest mit der Spindel der Werkzeugmaschine verbunden ist und somit ein selbsttätiges Entspannen eines Werkstückes verhindert wird. Dadurch ist eine hohe Betriebssicherheit bei langer Lebensdauer gegeben.

Außerdem ist die vorschlagsgemäß ausgebildete Spanneinrichtung konstruktiv einfach gestaltet und somit wirtschaftlich herzustellen, auch beansprucht diese nur einen geringen Bauraum, so dass ein vielseitiger vorteilhafter Einsatz bei hoher Zuverlässigkeit gewährleistet ist.

In der Zeichnung ist die gemäß der Erfindung ausgebildete Spanneinrichtung für Werkzeugmaschinen mit Ausführungsvarianten dargestellt und nachfolgend im Einzelnen erläutert. Hierbei zeigt:
- Figur 1: die an eine Werkzeugmaschine angebaute Spanneinrichtung, im Axialschnitt, während eines Arbeitsvorganges,
- Figur 2: die Spanneinrichtung nach Figur 1, in einem Teilschnitt und einer vergrößerten Darstellung, bei Übertragung von Antriebsenergie auf die Spanneinrichtung,
- Figur 3: eine Ausführungsvariante der Spanneinrichtung, in einem Teilschnitt, während eines Arbeitsvorganges,
- Figur 4: eine weitere Ausführungsform der Spanneinrichtung nach Figur 1, mit andersartigen Servoeinrichtungen, ebenfalls während eines Arbeitsvorganges,
- Figur 5: eine Spanneinrichtung nach Figur 1, mit unmittelbar auf den Bewegungswandler angeordneten Antriebsmotor, ebenfalls während eines Arbeitsvorganges und
- Figur 6: eine weitere Ausführungsvariante der Spanneinrichtung nach Figur 1.

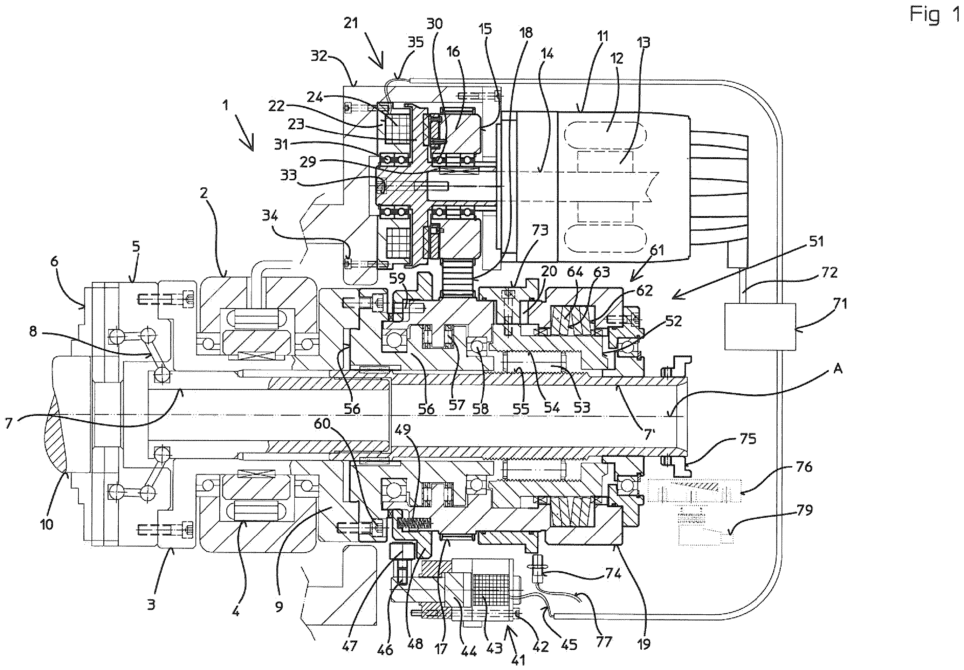

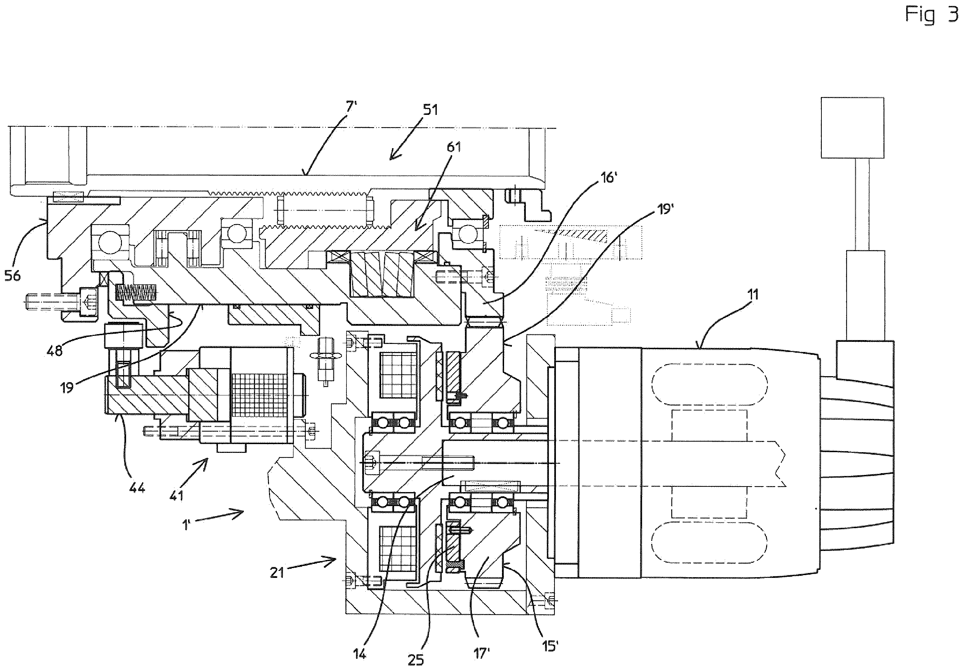

Die in den Figuren 1 bis 6 dargestellte und mit 1, 1', 1" bzw. 1''' bezeichnete Spanneinrichtung dient zur Betätigung eines auf einer mit einem Elektromotor 4 ausgestalteten Werkzeugmaschine 2 angeordneten Kraftspannfutters 5, mittels dessen radial verstellbarer Spannbacken 6 ein zu bearbeitendes Werkstück 10 in dem Kraftspannfutter 5 einzuspannen ist. Die Spannbacken 6 des Kraftspannfutters 5 sind hierbei über Umlenkhebel 8 durch eine axial verstellbare zweiteilige Zugstange 7, 7' betätigbar, die mit einem umschaltbaren elektrischen Antriebsmotor 11 bzw. 101 über einen Bewegungswandler 51 in Triebverbindung steht. Mittels des Bewegungswandlers 51 werden die rotatorische Verstellbewegungen des Antriebsmotors 11 in axiale Zustellbewegungen der Zugstange 7, 7' umgewandelt.

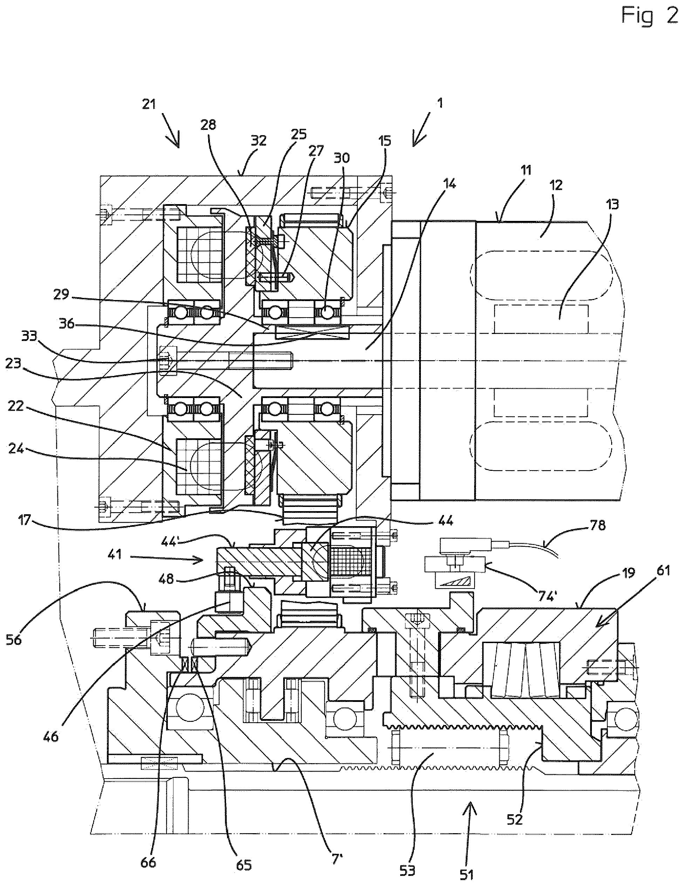

Der Antriebsmotor 11 besteht hierbei aus einem achsparallel zur Längsachse A der Spanneinrichtung 1 ortsfest angeordneten Stator 12 und einem Rotor 13, auf dessen Abtriebswelle 14 ein Abtriebsglied 15 angeordnet ist, das drehbar gelagert ist und ständig mit dem Bewegungswandler 51 in Triebverbindung steht. Dazu ist bei der Ausgestaltung nach den Figuren 1, 2 und 4 ein Riementrieb vorgesehen, der aus dem Abtriebsglied 15, das als Riemenscheibe 16 ausgebildet ist, sowie einer auf dem Gehäuse 19, das den Bewegungswandler 51 aufnimmt, befestigten Riemenscheibe 17 und einem Flach- oder Zahnriemen 18 gebildet ist.
Mittels einer ersten Servoeinrichtung 21 ist das Abtriebsglied 15 mit der Abtriebswelle 14 des Antriebsmotors 11 trieblich verbindbar. Mit Hilfe einer zweiten Servoeinrichtung 41 ist das Gehäuse 19 über einen Verstellring 48 mit der Spindel 3 der Werkzeugmaschine 2 koppelbar, so dass, wie dies in Figur 2 dargestellt ist, bei Beaufschlagung der ersten Servoeinrichtung 21 und der zweiten Servoeinrichtung 41 Antriebsenergie von dem Antriebsmotor 11 auf den Bewegungswandler 51 übertragen wird und von diesem auf die Zugstange 7, 7', so dass die Spannbacken 6 des Kraftspannfutters 5 zum Öffnen und Schließen des Kraftspannfutters 5 verstellt werden können.
Ist dagegen gemäß Figur 1 die erste Servoeinrichtung 21 entlüftet und die zweite Servoeinrichtung 41 ebenfalls entlüftet, ist das Gehäuse 19 über einen Stellring 48 mit der Spindel 3 der Werkzeugmaschine gekoppelt. Über die Riemenscheibe 17 und den Riementrieb 18 wird das die Riemenscheibe 16 bildende drehbar gelagerte Antriebsglied 15 mitgenommen. Der Antriebsmotor 11 ist in dieser Betriebsstellung, d.h. bei auf der Werkzeugmaschine 1 vorzunehmenden Arbeitsvorgängen, stillgesetzt. Die erste Servoeinrichtung 21 ist bei den Ausführungsbeispielen nach den Figuren 1, 2 und 3 sowie 5 als elektromagnetisch betätigbare Schaltkupplung ausgebildet, die aus zwei Gehäuseteilen 22 und 23, einer Magnetspule 24 sowie einem Anker 25 besteht. Das die Magnetspule 24 ausnehmende Gehäuseteil 22 ist hierbei mittels eines Wälzlagers 31 drehbar auf dem Gehäuseteil 23 gelagert, das über einen Keil 36 sowie einer Schraube 37 fest mit der Rotorwelle 14 verbunden ist. Außerdem ist in den Gehäuseteil 23, stirnseitig ein Reibbelag 28 eingesetzt, an dem bei Beaufschlagung der Servoeinrichtung 21 gemäß Figur 2 der Anker 25 entgegen der Kraft von Rückstellfeldern 26 anliegt.

Der Anker 25 ist hierbei axial verschiebbar auf Bolzen 27 gehalten, die in das Antriebsglied 15 eingesetzt sind, so dass zwischen diesen eine drehfeste Verbindung geschaffen ist. Außerdem ist das Gehäuseteil 23 auf einem mit in Richtung des Antriebsmotors 11 sich erstreckenden Ansatzstück in Form einer Nabe 29 versehen, auf der mittels Wälzlager 30 das Antriebsglied 15 drehbar gelagert ist. Über den Anker 25, den Reibbelag 28 sowie das Gehäuseteil 23 ist somit bei beaufschlagter Servoreinrichtung 21 das Antriebsglied 15 drehfest mit der Rotorwelle 14 verbunden, so dass eine Triebverbindung zwischen dem Antriebsmotor 11 und dem Bewegungswandler 41 und über diesen mit der Zugstange 7' hergestellt ist.

Die erste Servoeinrichtung 21 und das Abtriebsglied 25 sind bei der Ausgestaltung nach den Figuren 1 bis 3 in einem zweiteiligen Gehäuse 32 eingesetzt, an dem seitlich parallel zur Längsachse A der Spanneinrichtung 1 der Antriebsmotor 11 angeflanscht ist. Mittels Schrauben 34 ist das Gehäuseteil 22 der ersten Servoeinrichtung fest an dem Gehäuse 32 befestigt. Über eine Signalleitung 35 werden der Magnetspule 34 der ersten Servoeinrichtung 21 sowohl elektrische Energie zur Erregung als auch Steuersignale übermittelt.

Die zweite Servoeinrichtung 41 ist ebenfalls als elektromagnetisch betätigbare Schaltkupplung ausgebildet, indem in einem Gehäuse 42 eine Magnetspule 43 und ein mit dieser zusammenwirkender Anker 44 eingesetzt sind. An dem Anker 44 ist bei dieser Ausgestaltung ein Ansatz 44' angeformt, an dem auf Bolzen 46 abgestützte Wälzlager 47 angebracht sind. Über die Wälzlager 47 kann der Anker 44 bei Zufuhr von elektrischer Energie über eine Signalleitung 45 auf den Verstellring 48 einwirken, so dass dieser gemäß Figur 2 entgegen der Kraft von Rückstellfedern 49 in die rechte Endstellung verschoben wird. Über Bolzen 59 ist der Verstellring 48 verdrehfest mit dem den Bewegungswandler 41 aufnehmenden Gehäuse 19 verbunden und gegenüber diesem axial verschiebbar gehalten.

Wird jedoch die zweite Servoeinrichtung 41, wie dies in Figur 1 dargestellt ist, entlüftet, so wird durch die Kraft der Rückstellfedern 49 der Verstellring 48 nach links verschoben. Eine an dem Verstellring 48 seitlich angebrachte Verzahnung 65 rastet dadurch in eine an einem Zwischenglied 56 angearbeitete Gegenverzahnung 66 ein, so dass über den Verstellring 48 das Gehäuse 19 des Bewegungswandlers 41 drehfest mit dem Zwischenglied 56, das mittels Schrauben 60 an der Spindel 3 der Werkzeugmaschine 2 befestigt ist, mit der Spindel 3 drehfest verbunden ist und bei Arbeitsvorgängen zusammen mit dieser umläuft.

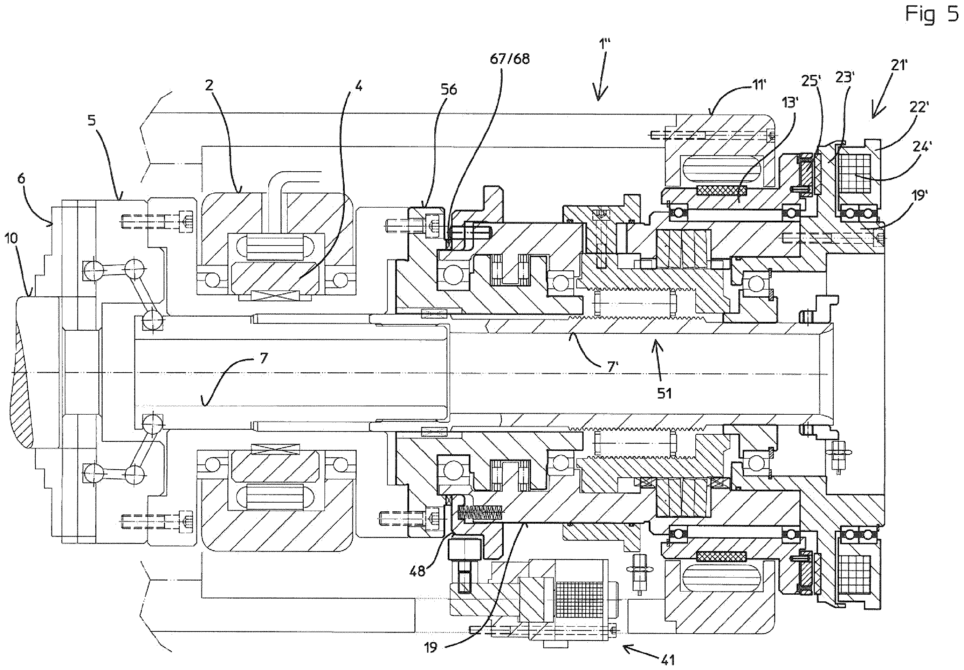

In Figur 5 ist des Weiteren gezeigt, dass der Stellring 48 auch über Reibbeläge 67 und 68 mit dem Zwischenglied 56, das an einem Flansch 9 der Maschinenspindel 3 befestigt ist, kraftschlüssig abgestützt werden kann.

Die Bewegungswandler 51 bestehen bei allen Ausgestaltungen jeweils aus einer Spindelmutter 52 und Wälzkörpern 53. Über an der Spindelmutter 52 und der Zugstange 7' angearbeitete Gewinde 54 bzw. 55, in die die Wälzkörper 53 eingreifen, sind die Spindelmutter 52 und die Zugstange 7' trieblich verbunden, so dass bei einer Verdrehung der Spindelmutter 52 durch den Antriebsmotor 1 die Zugstange 7' zum Spannen oder Entspannen des Kraftspannfutters 5 axial verstellt wird.

Mittels Lager 57 und 58 ist das den Bewegungswandler 51 und den Kraftspeicher 61 aufnehmende Gehäuse 19 drehbar auf dem Zwischenglied 56, das drehfest mit der Maschinenspindel 3 verbunden ist, gelagert. Bei Arbeitsvorgängen wird somit das Gehäuse 19 der in diesem angeordneten Bewegungswandler 41 sowie der Kraftspeicher 61, der zwei aus Tellerfedern 64 gebildeten Federpakete 62 und 63 besteht, von der Spindel 3 der Werkzeugmaschine 2 mitgenommen. Und da das Antriebsglied drehbar auf der Rotorwelle 14 gelagert ist, läuft auch dieses bei stillgesetztem Antriebsmotor 11 um.

Über eine Signalleitung 72 ist der Antriebsmotor 11 mit einer zentralen Recheneinheit 71 verbunden. Außerdem sind die erste Servoeinrichtung 21 über eine Signalleitung 35 und die zweite Servoeinrichtung 41 über eine Signalleitung 45 an die Recheneinheit 71 angeschlossen. Auch der Verstellweg der Spindelmutter 52 wird erfasst, und zwar mittels eines Stellringes 73, der an der Maschinenspindel 52 befestigt ist und mit Hilfe eines Schlitzes 20 dieses durchgreift, mittels eines an dem Stellring 73 angebrachten Endschalters 74 sind Lagebestimmungen der Spindelmutter 62 erfassbar.

Gemäß Figur 2 kann anstelle des Endschalters 74 auch eine Wegmesseinrichtung 74' vorgesehen werden. Über eine weitere der Zugstange 7' zugeordnete Wegmesseinrichtung 76, die mit einem Stellring 75 zusammenwirkt, ist auch die jeweilige Lage der Zugstange 7' ermittelbar. Über Steuerleitungen 77, 78 bzw. 79 wird die von dem Endschalter 74 bzw. den Wegmesseinrichtungen 74' und 76 ermittelten Signale ebenfalls der Recheneinheit 71 zugeleitet und in dieser ausgewertet, so dass die jeweilige Betriebsstellung der Spanneinrichtung bekannt ist.

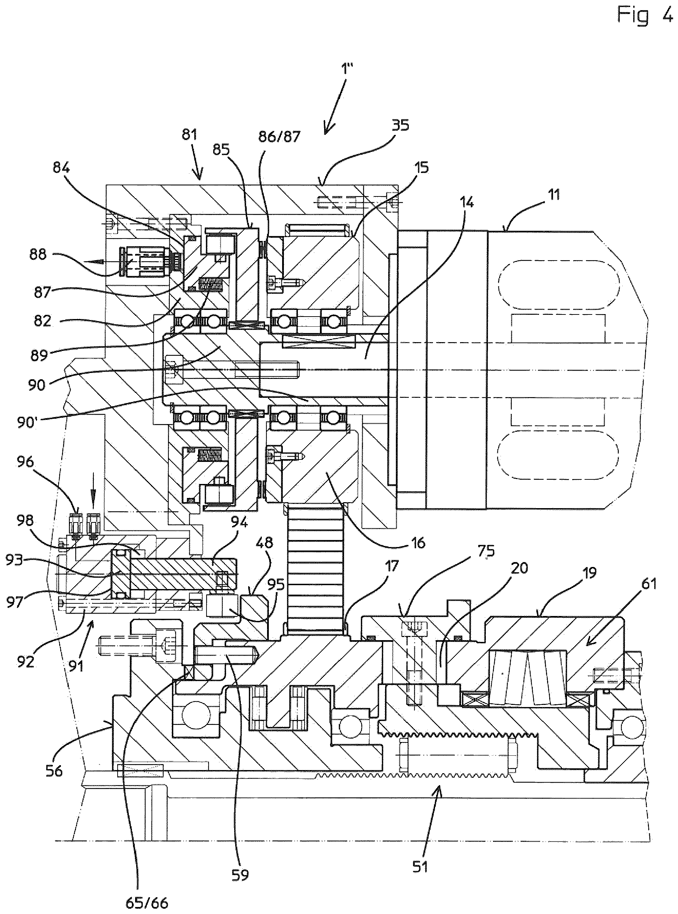

Gemäß Figur 4 können die erste Servoeinrichtung 81 und die zweite Servoeinrichtung 91 auch als hydraulisch oder pneumatisch beaufschlagte Schaltkupplungen ausgebildet werden. In einen Zylinder 82 bzw. 92 sind hierbei jeweils Verstellkolben 83 bzw. 93 eingesetzt, die von einem Druckmittel beaufschlagbar sind.

Bei der Servoeinrichtung 81 ist in den Zylinder 82 ein Druckraum vorgesehen. Der entgegen von Rückstellfedern 49 verstellbare Kolben 83 wirkt hierbei auf ein Stellglied 85 ein, das mit einer Stirnverzahnung 86 versehen ist, die in eine an dem Abtriebsglied 15 angebrachte Gegenverzahnung 87 bei Beaufschlagung des Verstellkolbens 83 über eine Zuführungsleitung 88 einführbar ist. Bei eingerückten Verzahnungen 86, 87 ist somit das Antriebsglied 15 drehfest mit der Rotorwelle 14 des Antriebsmotors 11 verbunden, und zwar über das Stellglied 85 und einem mit dieser gekoppelten Träger 90, dessen angeformte Nabe 90' mit der Rotorwelle 14 in Triebverbindung steht.

Bei der Servoeinrichtung 81 ist der Verstellkolben 93 dagegen mit einer Kolbenstange 94 ausgestattet, und in einem Zylinder 92 sind zwei Druckräume 97 und 98 vorgesehen, so dass der Verstellkolben 93 bei Zuführung von Druckmitteln über den Anschluss 96 zum Ausrücken der Verzahnungen 65 und 66 nach rechts und zu deren Einrücken durch die Kraft der Rückstellfedern 49 nach links verschoben werden kann.

Bei der Ausführungsform der Spanneinrichtung 1" nach Figur 5 ist der Rotor 13 des Antriebsmotors 11 unmittelbar auf dem den Bewegungswandler 51 aufnehmenden Gehäuse 19 drehbar gelagert. Der Anker 25' der Servoreinrichtung 21' ist hierbei an dem Rotor 13 axial verschiebbar befestigt, und die die Magnetspule 24' einschließenden Gehäuseteile 22' und 23' sind auf einem Zwischenstück 19', das an dem Gehäuse 19 befestigt ist, abgestützt. Auf diese Weise ergibt sich eine kompakte Bauweise bei großem nutzbaren Innendurchmesser der Spanneinrichtung 1".

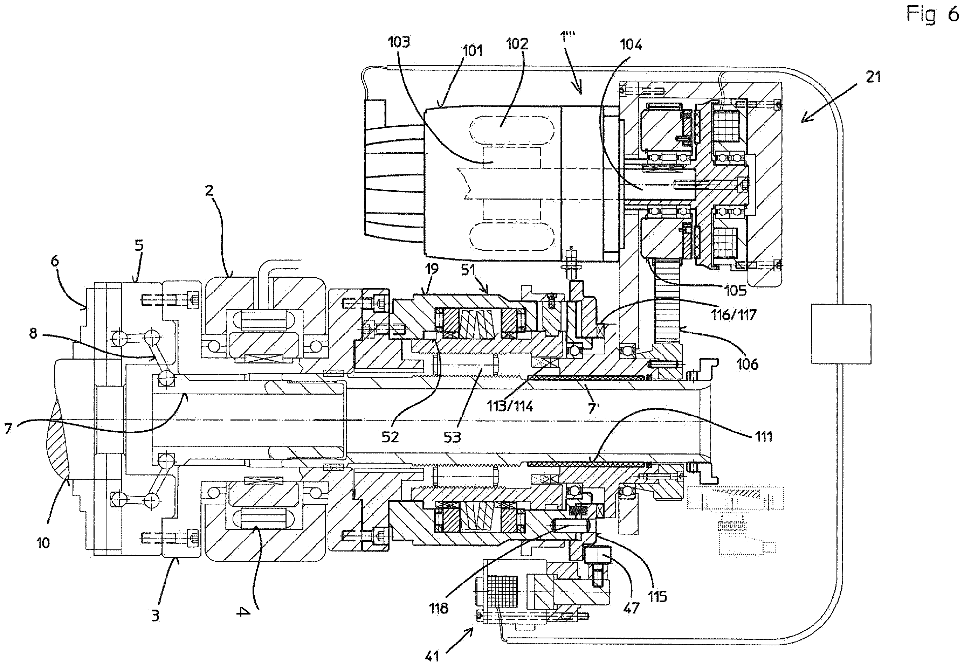

Bei der in Figur 6 gezeigten Spanneinrichtung 1''' wirkt der Antriebsmotor 101 nicht auf das den Bewegungswandler 51 aufnehmende Gehäuse 19 ein, sondern unmittelbar auf deren Spindelmutter 52. Um dies zu bewerkstelligen, ist seitlich neben dem Gehäuse 19 ein Zwischenglied 111 auf der Zugstange 7' drehbar gelagert, das über Nocken 113, 114 formschlüssig mit der Spindelmutter 52 verbunden ist. Außerdem ist mit dem Zwischenglied 111 ein Riementrieb 106 gekoppelt, so dass von der Rotorwelle 104 des aus einem Stator 102 oder einem Rotor 103 gebildeten Antriebsmotors 101 zur Verstellung der Spannbacken 6 des Kraftspannfutters 5 abgenommene Antriebsenergie bei geschlossener erster Servoeinrichtung 21 über das Abtriebsglied 105, den Riementrieb 106 und das Zwischenglied 111 in die Spindelmutter 52 des Bewegungswandlers 51 eingeleitet und von diesem auf die Zugstange 7' übertragen wird.

Mittels der zweiten Servoeinrichtung 41 ist das Verstellglied 115 zu betätigen, durch das die an diesem und der Spindelmutter 52 vorgesehenen Verzahnungen 116 und 117 ein und auszurücken sind. Da das Verstellglied 115 mittels Bolzen 118 drehfest mit dem an der Maschinenspindel 3 befestigten Gehäuse 19 verbunden ist, ist die Spanneinrichtung 1''' bei eingerückten Verzahnungen 116 und 117 bei Arbeitsvorgängen blockiert.

## Patentansprüche

1. Spanneinrichtung (1) für Werkzeugmaschinen (2), die mit einem Kraftspannfutter (5) zur Halterung eines Werkstückes (10) versehen und dessen Spannbacken (6) mittels der Spanneinrichtung (1) über eine axial verstellbare Zugstange (7, 7') betätigbar sind, wobei die Spanneinrichtung (1) einen umschaltbaren elektrischen Antriebsmotor (11) zum Auslösen von Spannbewegungen, einen Bewegungswandler (51) zur Umsetzung der Verstellbewegungen der Rotorwelle (14) des Antriebsmotors (11) in die zur Betätigung der Spannbacken (6) erforderlichen axialen Verstellbewegungen der Zugstange (7, 7') sowie einen Kraftspeicher (61) zur Aufrechterhaltung der Spannkraft aufweist, der aus vorgespannten Federpaketen (62, 63), die an einer Spindelmutter (52) des Bewegungswandlers (51) abgestützt sind, gebildet ist,
**dadurch gekennzeichnet,**
**dass** auf der Abtriebswelle (14) des Rotors (13) ein Abtriebsglied (15) drehbar gelagert ist, das ständig mit dem Bewegungswandler (51) in Triebverbindung steht, dass das Abtriebsglied (15) mittels einer ersten Servoeinrichtung (21) mit der Abtriebswelle (14) des Rotors (13) koppelbar ist und dass der Bewegungswandler (51) mittels einer zweiten Servoeinrichtung (41) oder durch die Kraft von Federn unmittelbar oder über Zwischenglieder mit der Spindel (3) der Werkzeugmaschine (2) verriegelbar ist.

2. Spanneinrichtung nach Anspruch 1,
**dadurch gekennzeichnet,**
**dass** der Bewegungswandler (51) und der Kraftspeicher (61) in einem glockenartig ausgebildeten Gehäuse (19) eingesetzt sind, das trieblich mit dem auf der Abtriebswelle (14) des Rotors (13) gelagerten Abtriebsglied (15) verbunden ist.

3. Spanneinrichtung nach Anspruch 1 oder 2,
**dadurch gekennzeichnet,**
**dass** das Gehäuse (19) formschlüssig mit der Spindelmutter (52) des Bewegungswandlers (51) beispielsweise über nockenförmige Mitnehmer (67, 68) oder Verzahnungen verbunden ist.

4. Spanneinrichtung nach Anspruch 1,
**dadurch gekennzeichnet,**
**dass** zur Übertragung der Antriebsenergie auf die Spindelmutter (52) des Bewegungswandlers (51) ein Zwischenglied (111) vorgesehen ist, das über einen Riementrieb (106) mit der Abtriebsglied (105) des Antriebsmotors (101) und gegebenenfalls über einen vorzugsweise seitlich neben dem Bewegungswandler (51) angeordnete Mitnehmer mit der Spindelmutter (52) formschlüssig verbindbar ist.

5. Spanneinrichtung nach einem oder mehreren der Ansprüche 1 bis 4,
**dadurch gekennzeichnet,**
**dass** zur Triebverbindung des Abtriebsgliedes (15) mit dem den Bewegungswandler (51) aufnehmenden Gehäuse (19) ein Riementrieb (16, 17, 18), insbesondere ein Zahnriementrieb oder eine Zahnradverbindung (16', 17') vorgesehen sind.

6. Spanneinrichtung nach einem oder mehreren der Ansprüche 1 bis 5,
**dadurch gekennzeichnet,**
**dass** die Triebverbindung (16, 17, 18) od. die Zahnradverbindung (16', 17') zwischen dem Abtriebsglied (15) des Antriebsmotors (11) und dem Gehäuse (19) des Bewegungswandlers (51) unter- oder übersetzt oder gleichlaufend ausgebildet ist.

7. Spanneinrichtung nach einem oder mehreren der Ansprüche 1 bis 6,
**dadurch gekennzeichnet,**
**dass** die erste Servoeinrichtung (21, 81) und/oder die zweite Servoeinrichtung (41, 91) als elektromagnetisch oder pneumatisch oder hydraulisch betätigbare Schaltkupplungen ausgebildet sind.

8. Spanneinrichtung nach Anspruch 7,
**dadurch gekennzeichnet,**
**dass** bei einer elektromagnetisch betätigbaren Servoeinrichtung (21) die zu verbindenden Bauteile über Reibglieder (28), über vorzugsweise mit Spitzverzahnungen versehene Zahnscheiben oder über mit Riffelungen und Rändelungen ausgestatteten Scheiben koppelbar sind.

9. Spanneinrichtung nach Anspruch 7 oder 8,
**dadurch gekennzeichnet,**
**dass** der Anker (24) der elektromagnetisch betätigbaren Schaltkupplung der 1. Servoeinrichtung (21) über eine oder mehrere Rückstellfedern (26) an dem Abtriebsglied (15) abgestützt ist.

10. Spanneinrichtung nach Anspruch 7,
**dadurch gekennzeichnet,**
**dass** die zweite Servoeinrichtung (41) mit einem mit dem Gehäuse (18) des Bewegungswandlers (51) drehfest verbundenen Stellring (48) zusammenwirkt, der auf der der Spindel (3) der Werkzeugmaschine (2) zugekehrten Stirnseite mit einer Verzahnung (65) oder einem Reibbelag versehen ist, der mit einer an der Maschinenspindel (3) vorgesehenen Gegenverzahnung (66) oder einem weiteren Reibbelag zusammenwirkt.

11. Spanneinrichtung nach Anspruch 10,
**dadurch gekennzeichnet,**
**dass** das Verstellglied (44) der zweiten Servoeinrichtung (41) über einen oder mehrere radial gerichtete, vorzugsweise mit Wälzlagern (47) versehene Bolzen (46) oder einem Winkelstück mit dem Verstellring (48) in Triebverbindung steht.

12. Spanneinrichtung nach einem oder mehreren der Ansprüche 1 bis 10,
**dadurch gekennzeichnet,**
**dass** bei Auslegung der ersten Servoeinrichtung (21) als elektromagnetisch betätigbare Schaltkupplung diese aus einem ortsfest angeordneten, die Magnetspule (24) aufnehmenden ersten Gehäuseteil (22) und einem gegenüber diesem drehbar gelagerten zweiten Gehäuseteil (23) besteht, das mit der Rotorwelle (14) des Antriebsmotors (11) fest verbunden ist.

13. Spanneinrichtung nach Anspruch 12,
**dadurch gekennzeichnet,**
**dass** der Anker (25) der elektromagnetisch betätigbaren Schaltkupplung (21) drehfest und axial verschiebbar mit dem Abtriebsglied (15) des Antriebsmotors (11) verbunden ist.

14. Spanneinrichtung nach einem oder mehreren der Ansprüche 1 bis 13,
**dadurch gekennzeichnet,**
**dass** die erste Servoeinrichtung (21) zusammen mit dem Abtriebsglied (15) des Antriebsmotors (11) in einem Gehäuse (32) angeordnet sind, auf dessen Außenseite der Antriebsmotor (11) seitlich angeflanscht ist.

15. Spanneinrichtung nach einem oder mehreren der Ansprüche 1 bis 14,
**dadurch gekennzeichnet,**
**dass** bei Ausbildung der ersten Servoeinrichtung (21) als elektromagnetisch betätigbare Schaltkupplung das dem Antriebsmotor (11) zugekehrte Gehäuseteil (23) mit einem als Nabe (29) ausgebildeten Ansatzstück versehen ist, auf dem das Abtriebsglied (15) drehbar gelagert ist.

16. Spanneinrichtung nach einem oder mehreren der Ansprüche 1 bis 15,
**dadurch gekennzeichnet,**
**dass** das den Bewegungswandler (51) aufnehmende Gehäuse (19) drehbar auf einem mit der Spindel (3) der Werkzeugmaschine (2) fest verbundenen Zwischenstück (56) gelagert ist.

17. Spanneinrichtung nach einem oder mehreren der Ansprüche 1 bis 16,
**dadurch gekennzeichnet,**
**dass** der Rotor (13') des Antriebsmotors (11') unmittelbar auf dem den Bewegungswandler (51) aufnehmenden Gehäuse (19) drehbar gelagert ist.

18. Spanneinrichtung nach Anspruch 17,
**dadurch gekennzeichnet,**
**dass** der Anker (25') der elektromagnetisch betätigbaren Servoeinrichtung (21') unmittelbar an dem Rotor (13') des Antriebsmotors (11) axial verschiebbar befestigt ist und dass die die Magnetspule (24') einschließenden Gehäuseteile (22', 23') auf einem an dem Gehäuse (19) des Bewegungswandlers (41) befestigten Zwischenstück (19') abgestützt sind.

19. Spanneinrichtung nach einem oder mehreren der Ansprüche 1 bis 18,
**dadurch gekennzeichnet,**
**dass** der Antriebsmotor (11), die erste Servoeinrichtung (21, 81) sowie die zweite Servoeinrichtung (41, 91) gemeinsam mittels einer zentralen Recheneinheit (71) steuerbar sind.

20. Spanneinrichtung nach einem oder mehreren der Ansprüche 1 bis 19,
**dadurch gekennzeichnet,**
**dass** dem Verstellglied (Spindelmutter (52)) des Bewegungswandlers (51) eine Wegmesseinrichtung (74') und/oder ein oder mehrere Endschalter (74) zugeordnet sind, deren Signale außerhalb des Gehäuses (19) des Bewegungswandlers (51) abgreifbar sind.

21. Spanneinrichtung nach einem oder mehreren der Ansprüche 1 bis 20,
**dadurch gekennzeichnet,**
**dass** der Zugstange (7, 7') eine Wegmesseinrichtung (76) zugeordnet ist, die vorzugsweise in deren der Werkzeugmaschine (2) abgewandten Endbereich angeordnet ist.

22. Verfahren zum Betrieb einer Spanneinrichtung (1) für Werkzeugmaschinen (2), die mit einem Kraftspannfutter (5) zur Halterung eines Werkstückes (10) versehen und dessen Spannbacken (6) mittels der Spanneinrichtung (1) über eine axial verstellbare Zugstange (7, 7') betätigbar sind, wobei die Spanneinrichtung (1) einen umschaltbaren elektrischen Antriebsmotor (11) zum Auslösen von Spannbewegungen, einen Bewegungswandler (51) zur Umsetzung der Verstellbewegungen der Rotorwelle (14) des Antriebsmotors (11) in die zur Betätigung der Spannbacken (6) erforderlichen axialen Verstellbewegungen der Zugstange (7, 7') sowie einen Kraftspeicher (61) zur Aufrechterhaltung der Spannkraft aufweist, der aus vorgespannten Federpaketen (62, 63), die an einer Spindelmutter (52) des Bewegungswandlers (51) abgestützt sind, gebildet ist,
**dadurch gekennzeichnet,**
**dass** die erste Servoeinrichtung (21, 81) und die zweite Servoeinrichtung (41, 91) in Abhängigkeit von dem Betriebszustand der Spanneinrichtung (1, 1', 1") jeweils derart gleichsinnig bzw. parallel oder wechselseitig gesteuert mittels einer gemeinsamen Recheneinheit (71) geschaltet werden, dass bei beaufschlagter erster Servoeinheit (21, 81) zur Übertragung von Antriebsenergie auf den Bewegungswandler (51) die Rotorwelle (13) des Antriebsmotors (11) mit dessen Abtriebsglied (15) gekoppelt und die zweite Servoeinrichtung (41, 91) derart geschaltet wird, dass die Triebverbindung (16, 17, 18, 16', 17') zwischen dem Gehäuse (19) und der Spindel (3) der Werkzeugmaschine (2) gelöst ist, und dass bei einer Änderung des Arbeitsvorganges der Werkzeugmaschine (3), beispielsweise beim Spannen oder Entspannen eines Werkstückes (10), die erste Servoeinrichtung 21, 81) geöffnet, die zweite Servoeinrichtung (41, 91) geöffnet oder beaufschlagt und das Gehäuse (19) des Bewegungswandlers (51) trieblich mit der Spindel (3) der Werkzeugmaschine (2) verbunden wird.

## Claims

1. Clamping device (1) for machine tools (2) which are provided with a power chuck (5) for holding a workpiece (10) and of which the clamping jaws (6) can be actuated by means of the clamping device (1) via an axially displaceable pull rod (7, 7'), wherein the clamping device (1) has a reversible electric drive motor (11) for initiating clamping movements, a movement converter (51) for converting the displacement movements of the rotor shaft (14) of the drive motor (11) to the axial displacement movements of the pull rod (7, 7') necessary for actuating the clamping jaws (6), as well as an energy storing device (61) for maintaining the clamping force which is formed from pretensioned spring assemblies (62, 63) which are supported on a spindle nut (52) of the movement converter (51), _ **characterised in that** on the output shaft (14) of the rotor (13) is rotatably mounted an output member (15) which is permanently connected in driving relationship to the movement converter (51), **in that** the output member (15) can be coupled to the output shaft (14) of the rotor (13) by means of a first servo device (21), and **in that** the movement converter (51) can be locked to the spindle (3) of the machine tool directly or via intermediate members by means of a second servo device (41) or by the force of springs.

2. Clamping device according to claim 1, **characterised in that** the movement converter (51) and the energy storing device (61) are inserted in a bell-like housing (19) which is connected in driving relationship to the output member (15) mounted on the output shaft (14) of the rotor (13).

3. Clamping device according to claim 1 or 2, **characterised in that** the housing (19) is connected in form-locking relationship to the spindle nut (52) of the movement converter (51), for example via cam-like dogs (67, 68) or tooth systems.

4. Clamping device according to claim 1, **characterised in that**, for transmission of the drive energy to the spindle nut (52) of the movement converter (51), there is provided an intermediate member (111) which can be connected in form-locking relationship to the output member (105) of the drive motor (101) by a belt drive (106) and, if occasion arises, to the spindle nut (52) by a dog preferably arranged laterally adjacent to the movement converter (51).

5. Clamping device according to one or more of claims 1 to 4, **characterised in that** a belt drive (16, 17, 18), in particular a toothed belt drive or a gear connection (16', 17'), is provided for connection of the output member (15) in driving relationship to the housing (19) which holds the movement converter (51).

6. Clamping device according to one or more of claims 1 to 5, **characterised in that** the drive connection (16, 17, 18) or the gear connection (16', 17') between the output member (15) of the drive motor (11) and the housing (19) of the movement converter (51) is underdriven or overdriven or synchronous.

7. Clamping device according to one or more of claims 1 to 6, **characterised in that** the first servo device (21, 81) and/or the second servo device (41, 91) are designed as electromagnetically or pneumatically or hydraulically operated clutches.

8. Clamping device according to claim 7, **characterised in that**, in the case of an electromagnetically operated servo device (21), the components to be connected can be coupled via friction members (28), via toothed wheels preferably provided with serrations or via wheels having fluted or knurled edges.

9. Clamping device according to claim 7 or 8, **characterised in that** the armature (24) of the electromagnetically operated clutch of the first servo device (21) is supported on the output member (15) via one or more return springs (26).

10. Clamping device according to claim 7, **characterised in that** the second servo device (41) cooperates with a collet (48) which is non-rotatably connected to the housing (18) of the movement converter (51) and which, on the end face facing towards the spindle (3) of the machine tool (2), is provided with a tooth system (65) or friction pad which cooperates with a counter tooth system (66) provided on the machine spindle (3) or a further friction pad.

11. Clamping device according to claim 10, **characterised in that** the displacement member (44) of the second servo device (41) is connected in driving relationship to the collet (48) via one or more radially oriented bolts (46) preferably provided with rolling bearings (47), or an angle piece.

12. Clamping device according to one or more of claims 1 to 10, **characterised in that**, if the first servo device (21) is designed as an electromagnetically operated clutch, the latter consists of a stationarily mounted first housing portion (22) which receives the magnetic coil (24) and a second housing portion (23) which is mounted rotatably relative to the first one and which is rigidly connected to the rotor shaft (14) of the drive motor (11).

13. Clamping device according to claim 12, **characterised in that** the armature (25) of the electromagnetically operated clutch (21) is connected non-rotatably and axially displaceably to the output member (15) of the drive motor (11).

14. Clamping device according to one or more of claims 1 to 13, **characterised in that** the first servo device (21) together with the output member (15) of the drive motor (11) are arranged in a housing (32) onto the outside of which the drive motor (11) is flanged laterally.

15. Clamping device according to one or more of claims 1 to 14, **characterised in that**, if the first servo device (21) is designed as an electromagnetically operated clutch, the housing portion (23) facing towards the drive motor (11) is provided with an attachment designed as a hub (29), on which the output member (15) is mounted rotatably.

16. Clamping device according to one or more of claims 1 to 15, **characterised in that** the housing (19) which receives the movement converter (51) is mounted rotatably on an intermediate piece (56) rigidly connected to the spindle (3) of the machine tool (2).

17. Clamping device according to one or more of claims 1 to 16, **characterised in that** the rotor (13') of the drive motor (11') is rotatably mounted directly on the housing (19) which receives the movement converter (51).

18. Clamping device according to claim 17, **characterised in that** the armature (25') of the electromagnetically operated servo device (21') is mounted axially displaceably directly on the rotor (13') of the drive motor (11) and **in that** the housing portions (22', 23') which enclose the magnetic coil (24') are supported on an intermediate piece (19') attached to the housing (19) of the movement converter (41).

19. Clamping device according to one or more of claims 1 to 18, **characterised in that** the drive motor (11), the first servo device (21, 81) and the second servo device (41, 91) can be controlled jointly by means of a central computing unit (71).

20. Clamping device according to one or more of claims 1 to 19, **characterised in that** associated with the displacement member (spindle nut (52)) of the movement converter (51) is a distance measuring device (74') and/or one or more limit switches (74) of which the signals can be picked up outside the housing (19) of the movement converter (51).

21. Clamping device according to one or more of claims 1 to 20, **characterised in that** associated with the pull rod (7, 7') is a distance measuring device (76) which is preferably arranged in its end region facing away from the machine tool (2).

22. Method for operating a clamping device (1) for machine tools (2) which are provided with a power chuck (5) for holding a workpiece (10) and of which the clamping jaws (6) can be actuated by means of the clamping device (1) via an axially displaceable pull rod (7, 7'), wherein the clamping device (1) has a reversible electric drive motor (11) for initiating clamping movements, a movement converter (51) for converting the displacement movements of the rotor shaft (14) of the drive motor (11) to the axial displacement movements of the pull rod (7, 7') necessary for actuating the clamping jaws (6), as well as an energy storing device (61) for maintaining the clamping force, which is formed from pretensioned spring assemblies (62, 63) which are supported on a spindle nut (52) of the movement converter (51), **characterised**
**in that** the first servo device (21, 81) and the second servo device (41, 91) are controlled in the same direction or parallel or alternately as a function of the operating state of the clamping device (1, 1', 1") and switched by means of a common computing unit (71) in such a way that, when the first servo unit (21, 81) is acted upon to transmit driving energy to the movement converter (51), the rotor shaft (13) of the drive motor (11) is coupled to its output member (15) and the second servo device (41, 91) is switched in such a way that the drive connection (16, 17, 18, 16', 17') between the housing (19) and the spindle (3) of the machine tool (2) is released, and in that, upon a change of the working operation of the machine tool (3), for example when clamping or unclamping a workpiece (10), the first servo device (21, 81) is opened, the second servo device (41, 91) is opened or acted upon and the housing (19) of the movement converter (51) is connected in driving relationship to the spindle (3) of the machine tool (2).

## Revendications

1. Dispositif de serrage (1) pour des machines-outils (2) qui sont pourvues d'un mandrin de serrage (5) pour fixer une pièce (10) et dont les mâchoires de serrage (6) sont aptes à être actionnées à l'aide du dispositif de serrage (1) par l'intermédiaire d'une barre de traction réglable axialement (7, 7'), le dispositif de serrage (1) comportant un moteur d'entraînement électrique réversible (11) pour déclencher des mouvements de serrage, un convertisseur de mouvement (51) pour transformer les mouvements de réglage de l'arbre de rotor (14) du moteur d'entraînement (11) en mouvements de réglage axiaux de la barre de traction (7, 7') nécessaires à l'actionnement des mâchoires de serrage (6), ainsi qu'un accumulateur d'énergie (61) pour maintenir la force de serrage, qui se compose de blocs-ressorts précontraints (62, 63) en appui contre un écrou de broche (52) du convertisseur de mouvement (51),
**caractérisé en ce qu'**il est prévu, monté en rotation sur l'arbre de sortie (14) du rotor (13), un organe de sortie (15) qui est en permanence en relation d'entraînement avec le convertisseur de mouvement (51), **en ce que** l'organe de sortie (15) est apte à être couplé à l'arbre de sortie (14) du rotor (13) à l'aide d'un premier servomécanisme (21), et **en ce que** le convertisseur de mouvement (51) est apte à être verrouillé directement à l'aide d'un deuxième servomécanisme (41) ou de la force de ressorts, ou par l'intermédiaire d'organes intermédiaires, avec la broche (3) de la machine-outil (2).

2. Dispositif de serrage selon la revendication 1,
**caractérisé en ce que** le convertisseur de mouvement (51) et l'accumulateur d'énergie (61) sont placés dans un carter en forme de cloche (19) qui est en relation d'entraînement avec l'organe de sortie (15) monté sur l'arbre de sortie (14) du rotor (13).

3. Dispositif de serrage selon la revendication 1 ou 2, **caractérisé en ce que** le carter (19) est relié par complémentarité de forme à l'écrou de broche (52) du convertisseur de mouvement (51) par exemple par l'intermédiaire d'éléments d'entraînement en forme de cames (67, 68) ou de dentures.

4. Dispositif de serrage selon la revendication 1,
**caractérisé en ce que** pour transmettre l'énergie d'entraînement à l'écrou de broche (52) du convertisseur de mouvement (51), il est prévu un élément intermédiaire (111) qui est apte à être relié par l'intermédiaire d'une transmission à courroie (106) à l'organe de sortie (105) du moteur d'entraînement (101), et éventuellement par complémentarité de forme à l'écrou de broche (52), par l'intermédiaire d'un élément d'entraînement disposé de préférence sur le côté du convertisseur de mouvement (51).

5. Dispositif de serrage selon l'une au moins des revendications 1 à 4, **caractérisé en ce que** pour la relation d'entraînement de l'organe de sortie (15) avec le carter (19) qui reçoit le convertisseur de mouvement (51), il est prévu une transmission à courroie (16, 17, 18), en particulier une transmission à courroie dentée ou une liaison à roues dentées (16', 17').

6. Dispositif de serrage selon l'une au moins des revendications 1 à 5, **caractérisé en ce que** la liaison d'entraînement (16, 17, 18) ou la liaison à roues dentées (16', 17') entre l'organe de sortie (15) du moteur d'entraînement (11) et le carter (19) du convertisseur de mouvement (51) est conçue avec une réduction ou une démultiplication ou est synchrone.

7. Dispositif de serrage selon l'une au moins des revendications 1 à 6, **caractérisé en ce que** le premier servomécanisme (21, 81) et/ou le deuxième servomécanisme (41, 91) sont conçus comme des embrayages à commande électromagnétique ou pneumatique ou hydraulique.

8. Dispositif de serrage selon la revendication 7,
**caractérisé en ce que** dans le cas d'un servomécanisme (21) à commande électromagnétique, les composants à relier sont aptes à être couplés par l'intermédiaire d'organes de friction (28), de disques dentés pourvus de préférence de dents pointues, ou de disques dotés de crantages ou de moletages.

9. Dispositif de serrage selon la revendication 7 ou 8, **caractérisé en ce que** l'induit (24) de l'embrayage à commande électromagnétique du premier servomécanisme (21) est en appui contre l'organe de sortie (15) par l'intermédiaire d'un ou plusieurs ressorts de rappel (26).

10. Dispositif de serrage selon la revendication 7,
**caractérisé en ce que** le deuxième servomécanisme (41) coopère avec un collier de réglage (48) qui est relié, fixe en rotation, au carter (18) du convertisseur de mouvement (51) et qui est pourvu, sur son côté frontal tourné vers la broche (3) de la machine-outil (2), d'une denture (65) ou d'une garniture de friction qui coopère avec une denture opposée (66) prévue sur la broche de machine (3) ou avec une autre garniture de friction.

11. Dispositif de serrage selon la revendication 10,
**caractérisé en ce que** l'organe de réglage (44) du deuxième servomécanisme (41) est en relation d'entraînement avec le collier de réglage (48) par l'intermédiaire d'un ou plusieurs boulons (46) dirigés radialement et de préférence pourvus de paliers à roulement (47), ou avec le collier de réglage (48) par l'intermédiaire d'une pièce coudée.

12. Dispositif de serrage selon l'une au moins des revendications 1 à 10, **caractérisé en ce que** si le premier servomécanisme (21) est conçu comme un embrayage à commande électromagnétique, celui-ci se compose d'une première partie de carter (22) stationnaire qui reçoit la bobine d'électro-aimant (24), et d'une deuxième partie de carter (23), montée en rotation par rapport à la première, qui est reliée de manière fixe à l'arbre de rotor (14) du moteur d'entraînement (11).

13. Dispositif de serrage selon la revendication 12,
**caractérisé en ce que** l'induit (25) de l'embrayage à commande électromagnétique (21) est relié, fixe en rotation et mobile axialement, à l'organe de sortie (15) du moteur d'entraînement (11).

14. Dispositif de serrage selon l'une au moins des revendications 1 à 13, **caractérisé en ce que** le premier servomécanisme (21) et l'organe de sortie (15) du moteur d'entraînement (11) sont disposés ensemble dans un carter (32) sur le côté extérieur duquel le moteur d'entraînement (11) est raccordé par bride latéralement.

15. Dispositif de serrage selon l'une au moins des revendications 1 à 14, **caractérisé en ce que** si le premier servomécanisme (21) est conçu comme un embrayage à commande électromagnétique, la partie de carter (23) tournée vers le moteur (11) est pourvue d'une embase, conçue comme un moyeu (29), sur laquelle l'organe de sortie (15) est monté en rotation.

16. Dispositif de serrage selon l'une au moins des revendications 1 à 15, **caractérisé en ce que** le carter (19) qui reçoit le convertisseur de mouvement (51) est monté en rotation sur une pièce opposée (56) reliée de manière fixe à la broche (3) de la machine-outil (2).

17. Dispositif de serrage selon l'une au moins des revendications 1 à 16, **caractérisé en ce que** le rotor (13') du moteur d'entraînement (11') est monté en rotation sur le carter (19) qui reçoit le convertisseur de mouvement (51).

18. Dispositif de serrage selon la revendication 17,
**caractérisé en ce que** l'induit (25') du servomécanisme (21') à commande électromagnétique est fixé, axialement coulissant, directement au rotor (13') du moteur d'entraînement (11), et **en ce que** les parties de carter (22', 23) qui entourent la bobine d'électro-aimant (24') sont en appui sur une pièce intermédiaire (19') fixée au carter (19) du convertisseur de mouvement (41).

19. Dispositif de serrage selon l'une au moins des revendications 1 à 18, **caractérisé en ce que** le moteur d'entraînement (11), le premier servomécanisme (21, 81) et le deuxième servomécanisme (41, 91) sont aptes à être commandés conjointement à l'aide d'une unité de calcul centrale (71).

20. Dispositif de serrage selon l'une au moins des revendications 1 à 19, **caractérisé en ce qu'**il est prévu, associés à l'organe de réglage (écrou de broche (52)) du convertisseur de mouvement (51), un dispositif de mesure de course (74') et/ou un ou plusieurs interrupteurs de fin de course (74) dont les signaux peuvent être saisis à l'extérieur du capteur (19) du convertisseur de mouvement (51) .

21. Dispositif de serrage selon l'une au moins des revendications 1 à 20, **caractérisé en ce qu'**il est prévu, associé à la barre de traction (7, 7'), un dispositif de mesure de course (76) qui est disposé de préférence dans la zone d'extrémité de ladite barre de traction (7, 7') opposée à la machine-outil (2).

22. Procédé pour le fonctionnement d'un dispositif de serrage (1) pour des machines-outils (2) qui sont pourvues d'un mandrin de serrage (5) pour fixer une pièce (10) et dont les mâchoires de serrage (6) sont aptes à être actionnées à l'aide du dispositif de serrage (1) par l'intermédiaire d'une barre de traction réglable axialement (7, 7'), le dispositif de serrage (1) comportant un moteur d'entraînement électrique réversible (11) pour déclencher des mouvements de serrage, un convertisseur de mouvement (51) pour transformer les mouvements de réglage de l'arbre de rotor (14) du moteur d'entraînement (11) en mouvements de réglage axiaux de la barre de traction (7, 7') nécessaires à l'actionnement des mâchoires de serrage (6), ainsi qu'un accumulateur d'énergie (61) pour maintenir la force de serrage, qui se compose de blocs-ressorts précontraints (62, 63) en appui contre un écrou de broche (52) du convertisseur de mouvement (51),
**caractérisé en ce que** le premier servomécanisme (21, 81) et le deuxième servomécanisme (41, 91), en fonction de l'état de fonctionnement du dispositif de serrage (1, 1', 1"), sont commutés à l'aide d'une unité de calcul commune (71), en étant commandés dans le même sens ou parallèlement, ou dans les deux sens, de telle sorte que lorsque la première servo-unité (21, 81) est contrainte, pour la transmission d'énergie d'entraînement au convertisseur de mouvement (51), l'arbre de rotor (13) du moteur d'entraînement (11) est couplé à l'organe de sortie (15) de celui-ci, et le deuxième servomécanisme (41, 91) est commuté de telle sorte que la liaison d'entraînement (16, 17, 18, 16', 17') entre le carter (19) et la broche (3) de la machine-outil (2) soit libérée, et que lors d'une modification de la phase de travail de la machine-outil (2), par exemple lors du serrage ou du desserrage d'une pièce (10), le premier servomécanisme (21, 81) s'ouvre, le deuxième servomécanisme (41, 91) s'ouvre ou est contraint, et une liaison d'entraînement est réalisée entre le carter (19) du convertisseur de mouvement (51) et la broche (3) de la machine-outil (2).
